# EUROPÄISCHE PATENTSCHRIFT

(11) **EP 2 019 563 B1**
(45) Veröffentlichungstag und Bekanntmachung des Hinweises auf die Patenterteilung: **19.02.2014**
(21) Anmeldenummer: 08010449.0
(22) Anmeldetag: 09.06.2008
(51) Int. Cl.: H04W 48/08

(54) **Verfahren zum Verbindungsaufbau mit einem zu vermessenden Mobiltelefon**
Method for establishing a connection with a mobile telephone to be surveyed
Procédé d'établissement d'une connexion avec un téléphone mobile à mesurer

(30) Priorität: 24.07.2007 DE 102007034345; 07.01.2008 DE 102008003384
(43) Veröffentlichungstag der Anmeldung: 28.01.2009
(73) Patentinhaber: Rohde & Schwarz GmbH & Co. KG, 81671 München (DE)
(72) Erfinder: Schachinger, Jürgen, 83026 Rosenheim (DE); Frick, Joachim, 82152 Planegg (DE)
(74) Vertreter: Körfer, Thomas

(56) Entgegenhaltungen:
- EP-A2- 1 199 903
- WO-A2-98/44748
- DE-A1- 19 736 325
- US-A1- 2004 192 313

## Beschreibung

Häufig besteht der Wunsch ein bestimmtes nicht standardkonformes, z.B. defektes Mobiltelefon, welches z.B. in einem GSM-Mobilfunknetz eingebucht ist, zu untersuchen, indem bestimmte Messungen durchgeführt werden, wobei andere Mobilfunkteilnehmer dabei möglichst wenig gestört werden sollen. Solche Messungen könnten z.B. Leistungsmessungen im Zusammenhang mit kommandierten Leistungseinstellungen sein. Um den regulären Netzbetrieb des öffentlichen Netzes nicht zu stören, wird idealerweise ein abgesetztes, vom öffentlichen Netzwerk unabhängigees Mess-Equipment eingesetzt.

Um derartige Messungen zu ermöglichen, muss ein zu vermessendes Mobiltelefon mit dem Mess-System in Verbindung treten, um sich am System anzumelden. Dieser Anmeldevorgang wird im Folgenden als "Einbuchen" bezeichnet. Nach dem Einbuchen hat das Mobiltelefon eine logische Verbindung zur Basisstation hergestellt. Um ein Einbuchen von Mobiltelefonen zu ermöglichen, sendet eine Mess-Basisstation als Komponente des Mess-Systems auf der gleichen Frequenz wie die ursprüngliche Basisstation einen Bereichs-Code (Location Area Code), der sich von denjenigem unterscheidet, welcher bislang für das zu vermessende Mobiltelefon gültig war. Außerdem muss sichergestellt werden, dass der Empfangspegel der Mess-Basisstation am Ort des zu vermessenden Mobiltelefons höher ist, als derjenige von der Basisstation, mit welcher das zu vermessende Mobiltelefon ursprünglich verbunden war.

Zum technologischen Hintergrund sei diesbezüglich z.B. auf die EP 1 199 903 A1 verwiesen.

Sobald sich das zu vermessende Mobiltelefon an der Mess-Basisstation anmeldet (einbucht), kann ein Signalisierungs-Kanal (Frequenz-Zeitschlitz-Kombination) zu diesem aufgebaut werden. Ein aktiver Signalisierungskanal wird im Folgenden als dedizierte Verbindung bezeichnet. Hierüber können dann SteuerInformationen an das zu vermessende Mobiltelefon übermittelt werden.

Die Qualität von Messungen ist dabei umso besser, je weniger Störsignale auf der für die dedizierte Verbindung verwendeten Frequenz vorhanden sind. Sofern der für die dedizierte Verbindung verwendete Signalisierungs-Kanal auf eine im aktuellen Frequenzband unbenutzte Frequenz gelegt werden kann, sind die Störungen im Allgemeinen sehr gering und Messergebnisse sind entsprechend gut.

Insbesondere bei einfacheren preisgünstigeren Anlagen, besteht aber der Wunsch, aus Kostengründen auf einen zweiten Transmitter in der Mess-Basisstation zu verzichten. Nachdem dann die Mess-Basisstation gezwungenermaßen die selbe Frequenz benutzt, wie die Basisstation im öffentlichen Netz, sind neben den ohnehin zu erwartenden Gleichkanalstörungen auch noch Störungen zu erwarten, welche durch Signalisierungs-Aktivitäten unbeteiligter Mobiltelefone ausgelöst werden, indem diese ebenso versuchen sich am Mess-System anzumelden. Auch wenn ein Einbuchen in das Mess-System durch entsprechende Signalisierung verhindert wird, kann zunächst nicht verhindert werden, dass andere Mobiltelefone so genannte Access-Bursts auf dem RACH-Kanal in Uplink-Richtung an die Mess-Basisstation senden und damit Störsignale erzeugen. Genaue Pegelmessungen sind dann z.B. nur möglich, wenn ein Zeitschlitz-selektives Messgerät verwendet wird. Ohne diese spezielle Anforderung an des Mess-Equipment sind alle Aktivitäten auf den übrigen Zeitschlitzen, insbesondere der Mess-Basisstation, der benutzten Frequenz als Störung zu betrachten.

Aus dem Dokument WO 98/44748 A2 ist die Ermittlung eines Datenverkehrsvolumens in einem zellulären Telefonsystem bekannt, wobei kein zu vermessendes Mobilfunkgerät in einer Mess-Basisstation eingebucht ist, sondern alle im zellulären Telefonsystem befindlichen Mobilfunkgeräte, die von einer Mess-Basisstation ausgestrahlte Sendeleistung messen und einer weiteren Basisstation zur Auswertung weiterleiten. In diesem Dokument wird das Einbuchen von Mobilfunkgeräten in eine Basisstation durch Setzen des Cell_Barr_Access-Parameters und Ausstrahlen dieses gesetzten Parameters im Broadcast-Kanal (Broadcast-Control-Channel BCCH) realisiert.

Aus dem Dokument DE 197 36 325 A1 ist ein zelluläres Mobilfunksystem bekannt, in dem eine oder mehrere Basisstationen jeweils Informationen ausstrahlen, aus denen Mobilfunkgeräte die aktuelle Verfügbarkeit der jeweiligen Basisstation ermitteln können.

Aus dem Dokument US 2004/192313 A1 ist das Einbuchen eines Mobilfunkgeräts in einer Basisstation bekannt.

DE 197 36 325 A1 und US 2004/192313 A1 offenbaren die Ausstrahlung der beiden Parameter Cell_Barr_Access und Cell_Barr_Qualify über den Broadcast-Control-Channel BCCH durch die Basisstation zur Signalisierung der Priorität, mit der ein Mobilfunkgerät auf die Basisstation zugreifen kann; auf diese Weise kann ein Zugriff von Mobilfunkgeräten auf die Basisstation verhindert werden. Darüber hinaus offenbart das Dokument US 2004/192313 A1 auch die Messung der Zell-Auswahlkriterien C1, C2 durch ein Mobilfunkgerät, um zu ermitteln, ob eine Zelle für das Mobilfunkgerät geeignet ist zu "campen".

Aus dem Dokument EP 1 199 903 A2 ist das Einbuchen eines Mobilfunkgerätes in eine Basisstation und das Messen des Mobilfunkgeräts durch die Basisstation bekannt. Dieses Dokument offenbart die Anpassung der Sendeleistung (Erhöhung der Sendeleistung) einer virtuellen mobilen Basisstation in Relation zur Sendeleistung von benachbarten Basisstationen, um die Zell-Auswahlkriterien C1, C2 für einen Zellenwechsel des Mobilfunkgeräts von einer benachbarten Basisstation zum virtuellen mobilen Basisstation zu erfüllen, d.h. die Zell-Auswahlkriterien C1, C2 der virtuellen mobilen Basisstation in Relation zu den Zell-Auswahlkriterien C1, C2 zu reduzieren. Die Änderung der Sendeleistung der virtuellen mobile Basisstation können durch geänderte Werte der Zell-Auswahlkriterien C1, C2 durch die Mobilfunkgeräte gemessen werden.

Die Erfindung liegt die Aufgabe zu Grunde, ein Verfahren zum Verbindungsaufbau anzugeben, das diese Störsignale verhindert oder zumindest zu minimiert.

Die Aufgabe wird durch ein Verfahren gemäß Patentanspruch 1 gelöst. Die abhängigen Patentansprüche enthalten vorteilhafte Weiterbildungen.

Erfindungsgemäß wird zunächst die Mess-Basisstation aktiviert und gewartet bis sich das zu vermessende Mobiltelefon anmeldet (einbucht). Nachfolgend wird die für Messzwecke benötigte dedizierte Verbindung aufgebaut. Sobald dies geschehen ist, bzw. der Verbindungsaufbau weit genug fortgeschritten ist, sendet die Mess-Basisstation ein Signal welches allen anderen Mobiltelefonen verbietet, auf diese Messbasisstation zuzugreifen.

Bei einer bevorzugten Lösung besteht das Signal z.B. aus den Parametern CELL_BARR_QUALIFY und CELL_BARR_ACCESS, welche geeignet gewählt werden und über den BCCH der Mess-Basisstation abgestrahlt werden. Das Senden dieses Signals hat keinerlei Auswirkung auf die bestehende dedizierte Verbindung. Somit können Messungen in hoher Qualität ausgeführt werden.

Alternativ kann die Mess-Basisstation durch Senden anderer Signale unattraktiv gemacht werden. Insbesondere eine künstliche Verschlechterung der so genannten Cell-Reselect-Kriterien C1 und C2 hält andere Mobiltelefone als das zu vermessende Mobiltelefon von Einbuchungsversuchen ab.

Ein Ausführungsbeispiel der Erfindung ist in der Zeichnung veranschaulicht. In der Zeichnung zeigen:
- Fig. 1: die Verbindung mehrerer Mobiltelefone mit der Basisstation;
- Fig. 2: die Verbindung mehrerer Mobiltelefone mit der Basisstation und den Verbindungsaufbau des zu vermessenden Mobiltelefons mit der Mess- Bassistation;
- Fig. 3: die vollständig aufgebaute dedizierte Verbindung des zu vermessenden Mobiltelefons mit der Mess- Basisstation und
- Fig. 4: den missglückten Verbindungsaufbau eines nicht zu vermessenden Mobiltelefons mit der Mess- Basisstation.

Das erfindungsgemäße Verfahren wird nachfolgend kurz unter Bezugnahme auf die Zeichnung als Ausführungsbeispiel beschrieben.

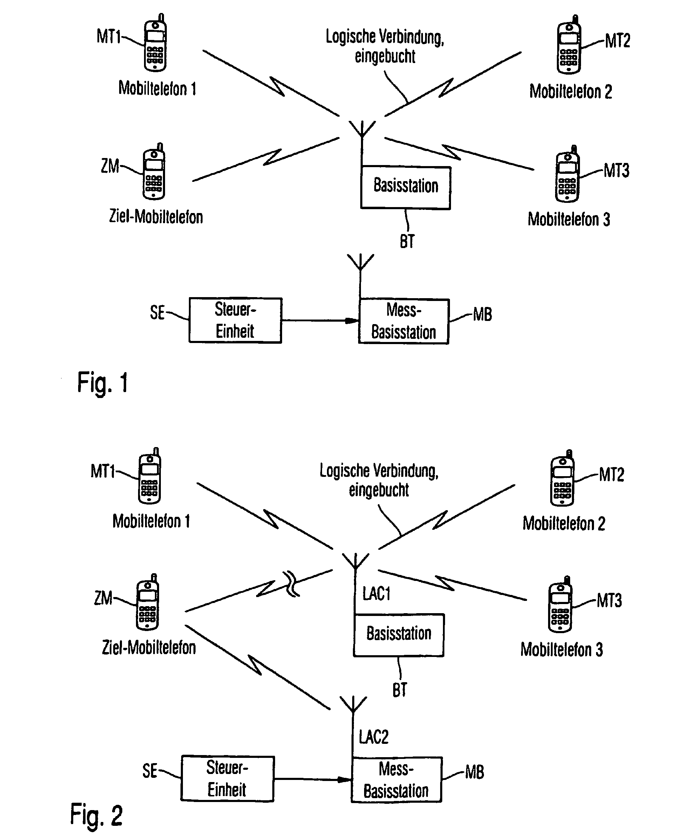

In Fig. 1 sind sämtliche Mobiltelefone MT1, MT2, MT3 und das zu vermessende Mobiltelefon ZM mit der Basisstation BT verbunden, d.h die Mobiltelefone MT1, MT2, MT3 und ZM sind über eine logische Verbindung auf der Basisstation BT eingebucht. Auf der Messbasisstation MB, die mit einer Steuereinheit SE in Verbindung steht, ist noch kein Mobiltelefon eingebucht.

In Fig. 2 bucht sich das Messmobiltelefon ZM auf der Mess-Basisstation MB ein. Dazu sendet die Mess-Basisstation MB auf der gleichen Frequenz wie die ursprüngliche Basisstation BT einen Bereichs-Code (Local Area Code) LAC2, der sich von dem Bereich-Code LAC1 der bisherigen Basisstation BT unterscheidet. Der Empfangspegel, mit welchem das Signal der Mess-Basisstation MB am Ort des zu vermessenden Mobiltelefons ZM ankommt, muss höher sein, als der Empfangspegel, mit welchem die ursprüngliche Basisstation BT am Ort des zu vermessenden Mobiltelefons ZM ankommt. Somit ist das C1-Kriterium für die Mess-Basisstation MB erfüllt, und das zu vermessende Mobiltelefon ZM wechselt auf die Mess-Basisstation MB.

Nachdem die Mess-Basisstation MB auf der gleichen Frequenz sendet, wie die ursprüngliche Basisstation BT, sind ohne die erfindungsgemäße Maßnahmen Störungen zu erwarten, welche durch die Signalisierungs-Aktivitäten der an der Messung nicht beteiligten Mobiltelefone MT1, MT2 und MT3 hervorgerufen werden, wenn diese versuchen, sich an der Mess-Basisstation MB anzumelden. Um die mit der Anmeldung verbundenen Access-Bursts auf dem RACH-Kanal (Anruf Kanal) der Mobiltelefone MT1, MT2 und MT3 zu vermeiden, ist es erfindungsgemäß vorgesehen, dass die Mess-Basisstation MB über den BCCH-Kanal (Rundstrahl-Kanal) ein entsprechendes Sperr-Signal aussendet, das anzeigt, dass die Mess-Basisstation MB für weitere Mobiltelefone gesperrt ist. Dies kann z.B. bei GSM-Systemen durch eine Kombination der Parameter CELL_BARR_QUALIFY und CELL_BARR_ACCESS realisiert werden. Dabei tritt eine Sperrung ein, wenn CELL_BARR_QUALIFY auf 0 gesetzt ist und CELL_BARR_ACCESS auf 1 gesetzt ist.

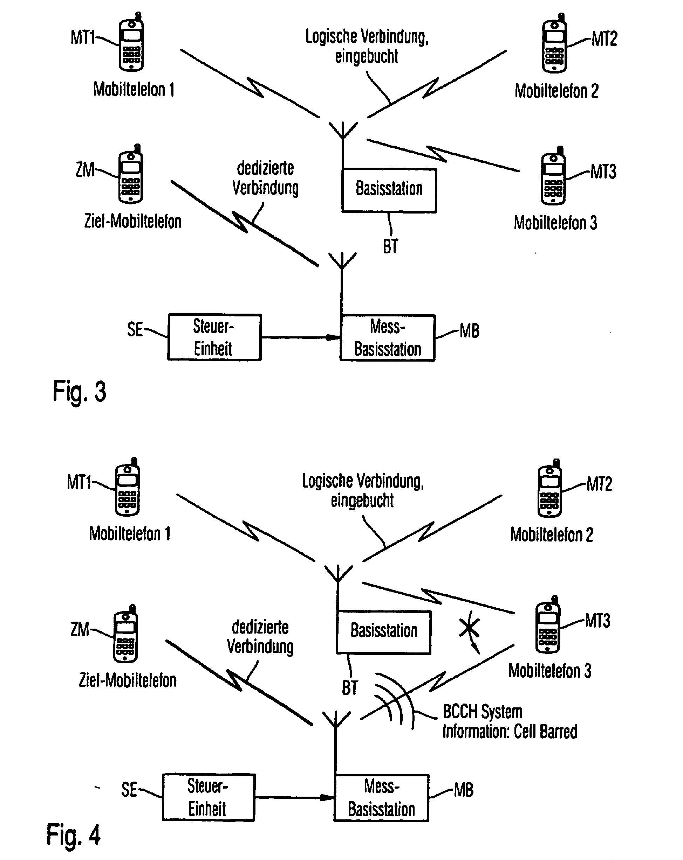

Fig. 3 veranschaulicht den Zustand, bei welchem nur das zu vermessende Mobiltelefon ZM auf der Mess-Basisstation MB eingebucht ist.

Fig. 4 veranschaulicht die Situation, bei welcher das unerwünschte Mobiltelefon MT3 erfolglos versucht, sich an der Mess-Basisstation MB einzubuchen.

Als alternatives Ausführungsbeispiel kommt auch eine künstliche Verschlechterung der Cell-Reselect-Kriterien C1 und C2 in Betracht, so dass die Mobiltelefone MT1,MT2 und MT3 von einem Einbuchen auf der Mess-Basisstation MB abgehalten werden.

Beispielsweise kann innerhalb der System-Informationen mit den Nummern 2, 3 und 4 auf dem BCCH ein Attribut mit dem Namen "RACH Control Parameters" (siehe ETSI EN 300 940, V7.8.0 (2000-06), Kap. 10.5.2.29 ) abgestrahlt werden, welches u.a. auch den Parameter "Cell Barr Access" enthält. Ein weiterer Parameter mit dem Namen "Cell Barr Qualify" (abgekürzt: CBQ) wird in den sog. "Rest Octets" der System Informationen mit den Nummern 3 und 4 (siehe ETSI EN 300 940, V7.8.0 (2000-06), Kap. 10.5.2.34 u. 10.5.2.35) gesendet. Wird gemäß Tabelle 1a aus 3GPP TS 05.08 V6.9.0 (2000-09) CELL_BAR_QUALIFY auf den Wert 0 und CELL_BAR_ACCESS auf den Wert 1 gesetzt, kann die Mess-Basisstation (MB) damit als gesperrt gekennzeichnet werden.

Weitere alternative Realisierungsmöglichkeiten sind: Man könnte auch CELL_BAR_QUALIFY auf 1 zu setzen. Damit wird unabhängig vom Parameter CELL_BAR_ACCESS die Cell Selection Priority auf low gesetzt und der gewünschte Effekt wird insbesondere in Gebieten mit vielen Basisstation pro Fläche (städtische Gebiete), ebenso erreicht.

Sobald die dedizierte Verbindung zwischen dem zu vermessenden Mobiltelefon (ZM) und Mess-Basisstation (MB) aufgebaut ist, wird die Attraktivität der Mess-Basisstation (MB) über die Cell-Reselect-Parameter "künstlich" verschlechtert. Der Cell-selection-Prozess ist in Kapitel 4.5 der GSM-Spezifikation TS 03.22 zu finden. Die Berechnung der Parameter C1 und C2 ist in TS 05.08, Kap. 6.4 beschrieben. So kann der Wert C1 verschlechtert werden, indem der Parameter RX_LEV_ACCESS_MIN (welcher auch über die System-Information des BCCH abgestrahlt wird) maximiert wird. Zusätzlich kann der C2-Wert z.B. über einen negativen Wert des Parameters CRO (CELL_RESELECT_OFFSET) stark reduziert werden. Sollten dennoch Zugriffsversuche anderer Mobiltelefone (MT1, MT2, MT3) stattfinden, so kann der Störpegel bei Messungen niedrig gehalten werden, indem die Sendeleistung für den Zugriff auf den Rach-Kanal minimiert wird. Der zugehörige Parameter lautet MS_TXPWR_MAX_CCH (TS 05.08, Kap. 4.2 unten) und wird über den BCCH abgestrahlt.

Sobald die dedizierte Verbindung zwischen dem zu vermessenden Mobiltelefon (ZM) und der Mess-Basisstation (MB) aufgebaut ist, wird der LAC (Location-Area-Code) der Mess-Basisstation (MB) auf den Wert der ursprünglichen Basisstation (BS) gesetzt. Damit buchen sich weniger Mobiltelefone ein, denn die Mobiltelefone, welche schon in dieser Location-Area eingebucht sind, brauchen keinen Location-Update mehr durchführen, wenn sie zur Mess-Basisstation (MB) kommen. Sie campen dann lediglich auf der Mess-Basisstation (MB).

Damit werden die Störungen bei Messungen durch Zugriffe von anderen Mobiltelefonen (MT1, MT2, MT3) zumindest erheblich reduziert. Ganz ausgeschlossen werden können sie natürlich nicht, insbesondere wenn der Standort der Mess-Basisstation (MB) am Rand einer Location-Area ist.

Die vorstehend beschriebenen und/oder in der Zeichnung gezeichneten Merkmale sind im Rahmen der Erfindung beliebig miteinander kombinierbar. Die Erfindung ist nicht auf die dargestellten Ausführungsbeispiele beschränkt.

## Patentansprüche

1. Verfahren zum Verbindungsaufbau eines zu vermessenden Mobiltelefons (ZM) mit einer Mess-Basisstation (MB) mit folgenden Verfahrensschritten:
- Aktivieren der Mess-Basisstation (MB), bis das zu vermessende Mobiltelefon (ZM) sich in der Mess-Basisstation (MB) einbucht,
- Aufbau einer dedizierten Verbindung der Mess-Basisstation (MB) mit dem zu vermessenden Mobiltelefon (ZM),
- Aussenden eines Sperr-Signals von der Mess-Basisstation (MB), welches allen in Reichweite der Mess-Basisstation (MB) befindlichen Mobiltelefonen (MT1, MT2, MT3) verbietet, sich an der Mess-Basisstation (MB) einzubuchen, sobald die dedizierte Verbindung zu dem zu vermessenden Mobiltelefon (ZM) zumindest weitgehend aufgebaut ist,
wobei nach dem Aufbau der dedizierten Verbindung zwischen dem zu vermessenden Mobiltelefon (ZM) und der Mess-Basisstation (MB) durch Reduzierung der Zell-Auswahlkriterien der Mess-Basisstation (MB) eine Einbuchung aller in Reichweite der Mess-Basisstation (MB) befindlichen Mobiltelefone (MT1, MT2, MT3) verhindert wird.

2. Verfahren nach Anspruch 1,
**dadurch gekennzeichnet,**
**dass** beim Aktivieren der Mess-Basisstation (MB) Systeminformationen auf einem Rundstrahl Kanal ausgesendet werden, wobei dieser Rundstrahl-Kanal auf derselben Kanalnummer abgestrahlt wird, auf der das zu vermessende Mobiltelefon (ZM) vor dem Aktivieren der Mess-Basisstation (MB) ursprünglich eingebucht war.

3. Verfahren nach Anspruch 1 oder 2,
**dadurch gekennzeichnet,**
**dass** mit dem Aussenden des Sperr-Signals frühestens mit Erhalt einer Wähl-Antwort-Nachricht vom zu vermessenden Mobiltelefon (ZM) begonnen wird.

4. Verfahren nach einem der Ansprüche 1 bis 3,
**dadurch gekennzeichnet,**
**dass** die Sendeleistung der Mess-Basisstation (MB) so groß gewählt wird, dass am Ort des zu vermessenden Mobiltelefons (ZM) bestimmte Zell-Auswahlkriterien für die Mess-Basisstation (MB) besser sind als diejenigen der Basisstation (BT), in welcher das zu vermessende Mobiltelefon (ZM) vorher eingebucht war.

5. Verfahren nach einem der Ansprüche 1 bis 4,
**dadurch gekennzeichnet,**
**dass** die Mess-Basisstation (MB) einen anderen Bereichs-Code als die Basisstation (BT) sendet, mit der das zu vermessende Mobiltelefon (ZM) vor Aktivieren der Mess-Basisstation (MB) verbunden war.

6. Verfahren nach einem der Ansprüche 1 bis 5,
**dadurch gekennzeichnet,**
**dass** die Mess-Basisstation (MB) mit einer Netzbetreiber-Kennung betrieben wird, welche identisch ist mit derjenigen Netzbetreiber-Kennung, die von der Basisstation (BT) verwendet wird, mit welcher das zu vermessende Mobiltelefon (ZM) vor Aktivieren der Mess-Basisstation (MB) ursprünglich in Verbindung stand.

7. Verfahren nach einem der Ansprüche 1 bis 6,
**dadurch gekennzeichnet,**
**dass** durch das Aussenden des Sperr-Signals alle anderen eingebuchten Mobiltelefone, die aktuell keine dedizierte Verbindung aufgebaut haben, die Mess-Basisstation (MB) verlassen und sich wieder an einer Basisstation (BT) im öffentlichen Netz einbuchen.

8. Verfahren nach einem der Ansprüche 1 bis 7,
**dadurch gekennzeichnet,**
**dass** die Mess-Basisstation (MB) durch eine Steuereinheit (SE) so gesteuert wird, dass nach Aufbau der dedizierten Verbindung zu dem zu vermessenden Mobiltelefon (ZM) von der Mess-Basisstation (MB) ein Signal gesendet wird, welches anderen Mobiltelefonen (MT1, MT2, MT3), welche momentan keine dedizierte Verbindung zur Mess-Basisstation (MB) aufgebaut haben, verbietet, auf die Mess-Basisstation (MB) zuzugreifen.

## Claims

1. Method for establishing a connection between a mobile telephone to be surveyed (ZM) and a measuring base station (MB), comprising the following method steps:
- activating the measuring base station (MB) until the mobile telephone to be surveyed (ZM) logs into the measuring base station (MB),
- establishing a dedicated connection between the measuring base station (MB) and the mobile telephone to be surveyed (ZM),
- transmitting a locking signal from the measuring base station (MB), which signal prohibits all mobile telephones (MT1, MT2, MT3) located within the range of the measuring base station (MB) from logging in at the measuring base station (MB) as soon as the dedicated connection to the mobile telephone to be surveyed (ZM) has been established, at least to a large extent,
wherein, once the dedicated connection between the mobile telephone to be surveyed (ZM) and the measuring base station (MB) has been established, all the mobile telephones (MT1, MT2, MT3) located within the range of the measuring base station (MB) are prevented from logging in by reducing the cell selection criteria of the measuring base station (MB).

2. Method according to claim 1, **characterised in that**, upon activation of the measuring base station (MB), system information is transmitted on an omnidirectional channel, this omnidirectional channel being emitted on the same channel number as that on which the mobile telephone to be surveyed (ZM) was originally logged in prior to the activation of the measuring base station (MB).

3. Method according to either claim 1 or claim 2, **characterised in that** transmission of the locking signal is started at the earliest upon receipt of a paging response message from the mobile telephone to be surveyed (ZM).

4. Method according to any of claims 1 to 3, **characterised in that** the transmitting power of the measuring base station (MB) is selected to be so high that, at the location of the mobile telephone to be surveyed (ZM), particular cell selection criteria for the measuring base station (MB) are better than those of the base station (BT) in which the mobile telephone to be surveyed (ZM) was previously logged in.

5. Method according to any of claims 1 to 4, **characterised in that** the measuring base station (MB) sends a different location area code from the base station (BT) to which the mobile telephone to be surveyed (ZM) was connected prior to activation of the measuring base station (MB).

6. Method according to any of claims 1 to 5, **characterised in that** the measuring base station (MB) is operated by means of a network operator identifier which is identical to the network operator identifier used by the base station (BT) to which the mobile telephone to be surveyed (ZM) was originally connected prior to activation of the measuring base station (MB).

7. Method according to any of claims 1 to 6, **characterised in that**, by transmitting the locking signal, all other logged-in mobile telephones which currently have not established a dedicated connection leave the measuring base station (MB) and log in at a base station (BT) in the public network again.

8. Method according to any of claims 1 to 7, **characterised in that** the measuring base station (MB) is controlled by a control unit (SE) in such a way that, once the dedicated connection to the mobile telephone to be surveyed (ZM) has been established, a signal is sent from the measuring base station (MB), which signal prohibits other mobile telephones (MT1, MT2, MT3) which instantaneously have not established a dedicated connection to the measuring base station (MB) from accessing the measuring base station (MB).

## Revendications

1. Procédé d'établissement de liaison d'un téléphone mobile à mesurer (ZM) à une station de base de mesure (MB) comportant les étapes de procédé suivantes :
- l'activation de la station de base de mesure (MB), jusqu'à ce que le téléphone mobile à mesurer (ZM) se connecte à la station de base de mesure (MB),
- l'établissement d'une liaison dédiée de la station de base de mesure (MB) au téléphone mobile à mesurer (ZM),
- l'envoi d'un signal de blocage par la station de base de mesure (MB), qui interdit à tous les téléphones mobiles (MT1, MT2, MT3) se trouvant à proximité de la station de base de mesure (MB), de se connecter à la station de base de mesure (MB), dès que la liaison dédiée au téléphone mobile à mesurer (ZM) est établie au moins en grande partie,
dans lequel, après l'établissement de la liaison dédiée entre le téléphone mobile à mesurer (ZM) et la station de base de mesure (MB), une connexion de tous les téléphones mobiles (MT1, MT2, MT3) se trouvant à proximité de la station de base de mesure (MB) est empêchée par réduction des critères de sélection de cellules de la station de base de mesure (MB).

2. Procédé selon la revendication 1, **caractérisé en ce que**
lors de l'activation de la station de base de mesure (MB), des informations de système sont émises sur un canal omnidirectionnel, dans lequel le seul canal omnidirectionnel est transmis sur le même numéro de canal, sur lequel le téléphone mobile à mesurer (ZM) était connecté à l'origine avant l'activation de la station de base de mesure (MB).

3. Procédé selon la revendication 1 ou 2, **caractérisé en ce que**
on commence par l'émission du signal de blocage au plus tôt avec l'obtention d'un message de réponse de sélection provenant du téléphone mobile à mesurer (ZM).

4. Procédé selon l'une des revendications 1 à 3, **caractérisé en ce que**
la capacité d'émission de la station de base de mesure (MB) est choisie si grande, que, à l'endroit du téléphone mobile à mesurer (ZM), des critères de sélection de cellules déterminés (C1, C2) pour la station de base de mesure (MB) sont meilleurs que ceux de la station de base (BT), à laquelle le téléphone mobile à mesurer (ZM) était auparavant connecté.

5. Procédé selon l'une des revendications 1 à 4, **caractérisé en ce que**
la station de base de mesure (MB) émet un autre code que la station de base (BT), avec laquelle le téléphone mobile à mesurer (ZM) était relié avant l'activation de la station de base de mesure (MB).

6. Procédé selon l'une des revendications 1 à 5, **caractérisé en ce que**,
la station de base de mesure (MB) fonctionne avec une clé d'opérateur, qui est identique à la clé d'opérateur, qui est utilisée par la station de base (BT), avec laquelle le téléphone mobile à mesurer (ZM) était en relation à l'origine avant l'activation de la station de base de mesure (MB).

7. Procédé selon l'une des revendications 1 à 6, **caractérisé en ce que**
grâce à l'émission du signal de blocage, tous les autres téléphones mobiles connectés, qui n'ont établi présentement aucune liaison dédiée, quittent la station de base de mesure (MB) et se connectent de nouveau à une station de base (BT) sur le réseau public.

8. Procédé selon l'une des revendications 1 à 7, **caractérisé en ce que**
la station de base de mesure (MB) est commandée par une unité de commande (SE), de sorte que, après établissement de la liaison dédiée de la station de base de mesure (MB) au téléphone mobile à mesurer (ZM), un signal est émis, qui interdit aux autres téléphones mobiles (MT1, MT2, MT3), qui n'ont établi momentanément aucune liaison dédiée avec la station de base de mesure (MB), d'accéder à la station de base de mesure (MB).
